# EUROPÄISCHE PATENTSCHRIFT

(11) **EP 2 522 483 B1**
(45) Veröffentlichungstag und Bekanntmachung des Hinweises auf die Patenterteilung: **14.08.2019**
(21) Anmeldenummer: 12167261.2
(22) Anmeldetag: 09.05.2012
(51) Int. Cl.: B29C 49/42, F16K 15/02, F16K 17/04, F16K 17/36

(54) **Vorrichtung und Verfahren zum Umformen von Kunststoffvorformlingen**
Method and device for reforming plastic pre-forms
Dispositif et procédé destinés à la déformation d'ébauches en plastique

(30) Priorität: 11.05.2011 DE 102011101259
(43) Veröffentlichungstag der Anmeldung: 14.11.2012
(73) Patentinhaber: Krones AG, 93073 Neutraubling (DE)
(72) Erfinder: Söllner, Jürgen, 93073 Neutraubling (DE); Handschuh, Eduard, 93073 Neutraubling (DE)
(74) Vertreter: Bittner, Bernhard

(56) Entgegenhaltungen:
- WO-A1-96/18541
- WO-A1-96/25285
- WO-A1-2007/041873
- WO-A2-2009/010024
- WO-A2-2010/020529
- DE-A1-102004 014 653
- DE-A1-102007 015 105

## Beschreibung

Die Erfindung betrifft einerseits eine Vorrichtung zum Umformen von Kunststoffvorformlingen zu Kunststoffbehältnissen mit einem Reinraum, mit wenigstens einer Blasstation umfassend eine Blasform zur Formgebung der Kunststoffvorformlinge mittels wenigstens eines Prozessdrucks und mit einer Entlastungseinrichtung zum Entlasten des Prozessdrucks oder eines zu einem Rückgewinnungsdruck reduzierten Prozessdrucks in die Atmosphäre, bei welcher die Entlastungseinrichtung wenigstens ein Entlastungsventil umfasst, mittels welchem der Prozessdruck oder der Rückgewinnungsdruck über einen Schalldämpfer in die Atmosphäre entlastet werden kann.

Die Erfindung betrifft andererseits ein Verfahren zum Umformen von Kunststoffvorformlingen zu Kunststoffbehältnissen mit einer Blasform in einem Reinraum, bei welchem die Kunststoffvorformlinge mit einem ersten Prozessdruck in der Blasform vorgeformt werden, bei welchem die vorgeformten Kunststoffvorformlinge anschließend mit einem zweiten Prozessdruck in der Blasform endgeformt werden und bei welchem der zweite Prozessdruck nach dem Endformen über ein Entlastungsventil sogleich in die Atmosphäre entlastet oder auf einen Rückgewinnungsdruck reduziert wird und der Rückgewinnungsdruck über das Entlastungsventil in die Atmosphäre entlastet wird.

Gattungsgemäße Vorrichtungen und Verfahren sind aus dem Stand der Technik gut bekannt.

Beispielsweise ist in der internationalen Patentanmeldung WO 2010/020529 A2 eine Vorrichtung zum Umformen von Kunststoffvorformlingen zu Kunststoffbehältnissen beschrieben, welche eine mehrere Blasstationen umfassende Transporteinrichtung und einen Reinraum aufweist. Mittels des Reinraums können aseptische Bedingungen während der Herstellung der Kunststoffbehältnisse und auch bei deren Abfüllung mit Getränken gut gewährleistet werden. Um einen diesbezüglichen Sterilisationsaufwand reduzieren zu können, ist an der Umformvorrichtung derjenige Bereich der Transporteinrichtung, an welchem die Blasstationen angeordnet sind, innerhalb des Reinraums und wenigstens ein weiterer Bereich der Transporteinrichtung außerhalb des Reinraums platziert. Insbesondere kann hierdurch die Größe des Reinraums reduziert werden, wodurch die zu sterilisierenden Bereiche an der Umformvorrichtung besonders gering gehalten werden können. Der Gegenstand der WO 2010/020529 A1 wird hiermit durch Bezugnahme vollumfänglich zum Gegenstand der vorliegenden Beschreibung gemacht.

Aus der europäischen Patentschrift EP 1 271 029 B1 ist eine Vorrichtung mit einer Blasstation zur Blasformung von Behältern bekannt, bei welcher ein Blasdruck zur Blasformung der Behälter von einer modifizierten Einrichtung zur pneumatischen Steuerung eines Blasdruckes gesteuert wird, wodurch ein für die Einrichtung erforderlicher Steuerdruck vorteilhaft vermindert werden kann.

Darüber hinaus ist aus der Patentschrift US 7,320,586 B2 eine Vorrichtung zum Blasformen von Preformen insbesondere zu Flaschen mit Hilfe eines Prozessdrucks bekannt, bei welchem der Prozessdruck als ein Rückgewinnungsdruck zumindest teilweise in einem hierfür vorgesehenen Druckbehältnis zurückgewonnen werden kann, bevor ein entsprechend reduzierter Restdruck in die freie Umgebungsluft entspannt wird.

WO2007041873 A1 offenbart eine Ventileinrichtung für Hohlkörperblasmaschinen zum Einblasen von Druckluft in ein Blasvolumen, wobei das Einblasen auf zwei Druckniveaus erfolgt.

In der Regel werden die zum Umformen erforderlichen Prozessdrücke ganz oder teilweise über entsprechende Schalldämpfer in die Umgebung entlastet, um hierdurch vorteilhafter Weise eine Reduzierung des Schallpegels zu erreichen. Oftmals sind derartige Schalldämpfer mehrschichtig aufgebaut und weisen dementsprechend eine hohe Anzahl an Spalten auf, in welchen bevorzugt Keime wachsen können. Hierbei besteht die Gefahr, dass sich die Keime insbesondere von dem Schalldämpfer ausgehend bis in den Reinraum ausbreiten und dort die vorhandenen Einrichtungen bzw. Vorformlinge und/oder fertig expandierte Behältnisse kontaminieren können. Aus diesem Grund werden insbesondere die Schalldämpfer entsprechend häufig gewartet oder ausgetauscht, was jedoch aufwändig ist und darüber hinaus auch hohe Kosten verursacht.

Es ist Aufgabe vorliegender Erfindung diesen Nachteil zu beseitigen.

Nach einem ersten Aspekt der Erfindung wird die vorliegende Aufgabe durch eine Vorrichtung zum Umformen von Kunststoffvorformlingen zu Kunststoffbehältnissen mit den Merkmalen des Anspruchs 1 gelöst.

Durch die Druckabfallsicherung wird vorteilhafter Weise gewährleistet, dass an dem Entlastungsventil eine Strömungsrichtung eines Druckmittels zum Umformen der Kunststoffvorformlinge immer nur aus der Entlastungseinrichtung heraus gerichtet ist, wodurch konstruktiv denkbar einfach verhindert wird, dass Keime von außerhalb des Reinraums durch die Entlastungseinrichtung hindurch, insbesondere durch das Entlastungsventil hindurch, in den Reinraum gelangen und diesen kontaminieren.

Insofern ist es vorteilhaft, wenn das Entlastungsventil kurz vor Erreichen des Atmosphärendrucks geschlossen ist. Somit ist die Gefahr verringert, dass Keime in ein Kunststoffbehältnis bzw. in eine Sterilzone der vorliegenden Vorrichtung gelangen. Vorzugsweise wird das Entlastungsventil spätestens bei einem definierten Überdruck in dem fertig geblasenen Kunststoffbehältnis geschlossen, wie nachstehend noch erläutert ist. Diese Maßnahme bewirkt eine Luftströmung in nur einer Richtung und unterbindet somit die Ausbreitung der Keime in Richtung des Kunststoffbehältnisses. Idealerweise geschieht eine Restdruckentlastung aus dem Kunststoffbehältnis beim Abheben einer entsprechenden Blasdüse. Dies erlaubt vorteilhafter Weise einen Einsatz von hygienisch nicht optimierten Schalldämpfern.

Die Aufgabe der Erfindung wird auch durch das Verfahren zum Umformen von Kunststoffvorformlingen zu Kunststoffbehältnissen mit den Merkmalen des Anspruchs 8 gelöst.

Das Entlastungsventil wird bei einem Entlastungsvorgang bereits geschlossen, bevor das Atmosphärendruckniveau erreicht ist, wodurch eine Kontaminierung ausgeschlossen werden kann.

Hinsichtlich einer alternativen, nicht erfindungsgemäßen Verfahrensführung könnte das Entlastungsventil auch noch während des Erreichens des Atmosphärendruckniveaus geschlossen werden, wodurch jedoch die Gefahr einer Keimausbreitung in das Entlastungsventil hinein und in Richtung des Reinraums ansteigt.

Weiterhin wird eine Vorrichtung zum Umformen von Kunststoffvorformlingen zu Kunststoffbehältnissen mit einem Reinraum und mit wenigstens einer Blasstation umfassend eine Blasform zur Formgebung der Kunststoffvorformlinge mittels wenigstens eines Prozessdrucks und mit einer Entlastungseinrichtung zum Entlasten des Prozessdrucks oder eines zu einem Rückgewinnungsdruck reduzierten Prozessdrucks in die Atmosphäre offenbart, bei welcher die Entlastungseinrichtung wenigstens ein Entlastungsventil umfasst, mittels welchem der Prozessdruck oder der Rückgewinnungsdruck über einen Schalldämpfer in die Atmosphäre entlastet werden kann, wobei sich die Vorrichtung dadurch auszeichnet, dass die Entlastungseinrichtung eine Druckabfallsicherung mit Mitteln zum Halten eines Antikontaminierungsdrucks zumindest an dem Entlastungsventil aufweist, wobei der Antikontaminierungsdruck zwischen dem Prozess- bzw. Rückgewinnungsdruck und dem Atmosphärendruck liegt.

Eine Kontaminierung von Bauteilen und/oder Bauteilgruppen der Umformvorrichtung innerhalb des Reinraums wird besonders einfach dadurch verhindert, dass der Druck insbesondere in der Entlastungseinrichtung vor dem Schließen des Entlastungsventils immer oberhalb des Atmosphärendrucks gehalten wird.

Durch diese körperlose Keimbarriere kann ein Überspringen der Keime von außerhalb des Reinraums in den Reinraum hinein außergewöhnlich einfach verhindert werden. Zumal ist die hier vorgeschlagene körperlose Keimbarriere im Wesentlichen wartungsfrei.

Vorzugsweise herrscht insbesondere am Entlastungsventil vor dessen Schließung immer ein Antikontaminierungsdruck mit einem Wert zwischen dem Prozess- bzw. Rückgewinnungsdruck und dem Atmosphärendruck.

Insofern sieht eine vorteilhafte Verfahrensvariante vor, dass an einer der Blasform zugewandten Anschlussseite des Entlastungsventils zumindest temporär ein Antikontaminierungsdruck eingestellt wird, der immer oberhalb des Atmosphärendrucks liegt.

Es ist darüber hinaus vorteilhaft, wenn der Antikontaminierungsdruck einen Wert unterhalb 5 bar, vorzugsweise einen Wert unterhalb 2 bar, aufweist, so dass dieser geringere Druck vorteilhafter Weise auch durch ein Abheben einer Blasdüse konstruktiv einfach direkt an der Blasstation entspannt werden kann. Hierdurch kann auf ein weiteres Entlastungsventil innerhalb des Reinraums verzichtet werden.

Eine weitere vorteilhafte Verfahrensvariante sieht vor, dass der Antikontaminierungsdruck in den Reinraum hinein und insbesondere an dem Kunststoffbehältnis entlastet wird, wodurch eine Gesamtdruckentspannung verfahrenstechnisch besonders einfach vorgenommen werden kann.

Es versteht sich, dass die Druckabfallsicherung und insbesondere auch deren Mittel zum Halten des Antikontaminierungsdrucks vielfältig ausgestaltet sein können. Eine erste besonders einfach bauende Ausführungsvariante sieht vor, dass die Druckabfallsicherung zum Schließen des Entlastungsventils eine mechanische Vorspannungsfeder für einen mechanisch betätigbaren Ventilkolben, insbesondere für einen federvorgespannten Ventilkolben, umfasst. Diese Variante ist besonders störungsunanfällig und damit auch sehr wartungsarm.

Die Federvorspannung kann hierbei derart eingestellt werden, dass bei einem Erreichen eines definierten Prozessdrucks im Kunststoffbehältnis der Ventilkolben durch Federkraft in eine Schließstellung verschoben wird.

Vorteilhafter Weise kann die Stärke einer diesbezüglichen Vorspannungsfeder in Abhängigkeit eines gewünschten Schließzeitpunktes des Entlastungsventils bzw. eines gewünschten Antikontaminierungsdruck gewählt oder eingestellt werden. Eine Vorspannung der Feder kann mittels eines Mechanismus voreingestellt werden.

Hinsichtlich einer alternativen Ausführungsvariante, ist es vorteilhaft, wenn die Druckabfallsicherung zum Schließen des Entlastungsventils eine pneumatische Vorspannungsfeder für einen berührungslos betätigbaren Ventilkolben, insbesondere einen pneumatisch federvorgespannten Ventilkolben, umfasst. Hierdurch kann eine besonders reibungsarme Vorspannungsfeder realisiert sein.

Eine solche pneumatische Vorspannung stellt einen zusätzlichen Steuerkolben dar. Der Luftdruck kann mit Hilfe eines Druckreglers so eingestellt werden, dass bei Erreichen eines definierten Prozessdrucks im Kunststoffbehältnis der Ventilkolben durch pneumatische Vorspannung schließt. Um den zusätzlichen Druckregler für die pneumatische Vorspannung gegebenenfalls sparen zu können, kann auch eine schon an der Vorrichtung vorhandene Steuerluft genommen werden.

Dabei kann ein Kolbendurchmesser der pneumatischen Vorspannung so gewählt werden, dass das Entlastungsventil bei Erreichen des definierten Prozessdrucks im Kunststoffbehältnis schließt. Insofern kann die Schließkraft konstruktiv einfach durch die Höhe der Druckluft und/oder die Größe des Kolbendurchmessers angepasst werden.

Eine weitere bevorzugte Ausführungsvariante sieht vor, dass die Druckabfallsicherung zum Schließen des Entlastungsventils einen mittels eines pneumatischen Steuerventils betätigbaren Ventilkolben umfasst, wobei das pneumatische Steuerventil in Abhängigkeit eines Antikontaminierungsdrucks steuerbar ist. Hierdurch kann eine außergewöhnlich hohe Flexibilität beim Einstellen des Antikontaminierungsdrucks bzw. eines Schließzeitpunktes des Entlastungsventils erreicht werden.

Baulich sehr einfach kann die Druckabfallsicherung realisiert sein, wenn die Druckabfallsicherung das Entlastungsventil umfasst. Hierdurch kann die Druckabfallsicherung vorteilhafter Weise zumindest teilweise sogleich in das vorhandene Entlastungsventil implementiert werden.

Um das Entlastungsventil rechtzeitig vor dem Erreichen des Atmosphärendrucks schließen zu können, ist es vorteilhaft, wenn die Druckabfallsicherung Mittel zum Detektieren eines reinraumseitigen und/oder blasformseitigen Prozessdrucks oder Rückgewinnungsdrucks umfasst.

Gegebenenfalls können hierfür bereits an der Umformvorrichtung vorhandene Drucksensoren verwendet werden.

Kumulativ oder alternativ kann ein Rückschlagventil an der oder im Bereich der Entlastungseinrichtung vorgesehen sein. Mittels eines derartigen Rückschlagventils kann ebenfalls eine Gefahr einer in den Reinraum hinein gerichteten Luftströmung verringert werden.

Weitere Vorteile, Ziele und Eigenschaften vorliegender Erfindung werden anhand anliegender Zeichnung und nachfolgender Beschreibung erläutert, in welchen beispielhaft eine Umformvorrichtung und verschiedene Entlastungsventile mit unterschiedlich arbeitenden Druckabfallsicherungen dargestellt und beschrieben sind. Hierbei zeigen:
- Fig. 1: schematisch eine Ansicht einer Anlage zum Herstellen von Kunststoffbehältnissen mit einer in einem Reinraum angeordneten Blasstation;
- Fig. 2: schematisch eine Detailansicht des Reinraums im Bereich der Blasstation aus der Figur 1;
- Fig. 3: schematisch eine Ansicht eines ersten Ausführungsbeispiels eines Entlastungsventils mit einer Druckabfallsicherung umfassend einen federvorgespannten Ventilkolben in geschlossener und geöffneter Darstellung;
- Fig. 4: schematisch eine Ansicht eines zweiten Ausführungsbeispiels eines Entlastungsventils mit einer Druckabfallsicherung umfassend einen pneumatisch vorgespannten Ventilkolben in geschlossener und geöffneter Darstellung;
- Fig. 5: schematisch eine Ansicht eines weiteren Ausführungsbeispiels eines Entlastungsventils mit einer Druckabfallsicherung umfassend eine Überdruckerfassung zum Steuern eines Ventilkolbens in geschlossener und geöffneter Darstellung; und
- Fig. 6: schematisch ein Schaltdiagramm eines Entlastungsventils mit einer Druckabfallsicherung in Abhängigkeit eines Betriebsdrucks.

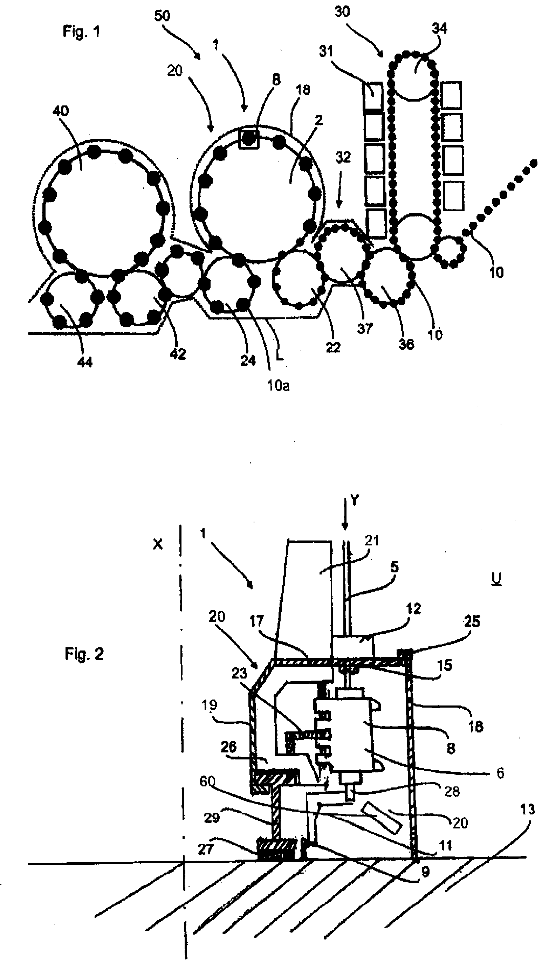

Figur 1 zeigt eine schematische Darstellung einer Anlage zum Herstellen von Kunststoffbehältnissen. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch, wie oben erwähnt, durch elektromagnetische bzw. UV-Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet ist. In einer weiteren bevorzugten Ausführungsform ist der Reinraum 20 nicht nur im Bereich von Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas aus dem Reinraum 20 strömt und so verloren geht.

Der Reinraum 20 ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen 8 angeordnet ist, wobei hier lediglich eine dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 10a von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 20 angeordnet ist, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 im Bereich einer Blasstation 8. Eine Vielzahl derartiger Blasstationen 8 wird mit einer Transporteinrichtung 2 (d.h. dem Träger 2) drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 20 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 20 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 28 unterhalb der einzelnen Blasstationen 8 aus dem Reinraum 20 herauszuführen.

Die Führungskurve könnte dabei beispielsweise unter dem Reinraum 20 angeordnet sein und/oder auch seitlich versetzt zu dem Reinraum 20 oder aber auch über dem Reinraum 20

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange 5 während des Blasvorgangs sowohl außerhalb des Reinraums 20 als auch innerhalb des Reinraums sind. Zu diesem Zweck ist es möglich, außerhalb des Reinraums 20 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt.

Die einzelnen Blasstationen bzw. Umformungsstationen 8 weisen jeweils Blasformträger 6 auf, innerhalb derer die Blasformen (in Fig. 2 nicht gezeigt) angeordnet sind. Diese Blasformträger können hier, wie im Stand der Technik bekannt, zwei Blasformträgerteile aufweisen, die bezüglich einander mittels einer gemeinsamen Schwenkwelle 3 zum Öffnen und Schließen der Blasform schwenkbar sind.

Das Bezugszeichen 60 kennzeichnet hier eine Beaufschlagungseinrichtung, welche zum Beaufschlagen der Umformungsstationen mit dem fließfähigen Sterilisationsmittel dient. Diese Beaufschlagungseinrichtung 60 kann sich am Transportrad 2 oder an der stehenden Wandung 18 befinden oder generell stationär angeordnet sein und Düsen oder ähnliches aufweisen. Zudem ist es vorteilhaft, Sterilluft zum Sterilisieren des Reinraums 20 über das Lüftungssystem in den Reinraum 20 einzubringen.

Alternativ oder zusätzlich könnte es sich jedoch bei der Beaufschlagungseinrichtung jedoch auch um eine Einrichtung handeln, welche die Umformungsstationen mit (insbesondere elektromagnetischer) Strahlung, z.B. UV-oder Elektronenstrahlung beaufschlagt. In diesem Falle wäre vorteilhaft wenigstens ein Bereich der Dichtungseinrichtung in einem zusammengebauten Zustand der Bauteile für diese elektromagnetische Strahlung erreichbar.

Innerhalb des Sterilraums sind nun die beiden miteinander verbundenen Bauteile angeordnet. Im Folgenden werden einige Beispiele für aneinander angeordnete Bauteile ausgeführt. So könnte es sich beispielsweise bei den Bauteilen um einen Blasformträger mit daran angeordneter Blasform handeln oder auch um aneinander angeordnete Bauteile eines Verschließmechanismus zum Verschließen der Blasformen. Allgemein ist jedoch die Offenbarung auf beliebige, insbesondere innerhalb des Sterilraums aneinander angeordnete, Bauteile anzuwenden, aber auch auf Bauteile, welche an einer (Innen)wandung des Sterilraums angeordnet sind oder auf teilweise außerhalb und teilweise innerhalb des Sterilraums angeordnete Bauteile. Das Bezugszeichen U in Fig. 2 bezieht sich auf eine (unsterile) Umgebung des Reinraums 20.

Es wäre jedoch auch (anders als in Fig. 2 gezeigt) möglich und bevorzugt, dass die Transporteinrichtung 2 bzw. der Träger einen C - förmigen Aussenumfang aufweist, der auch teilweise die Aussenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Aussenwandung des Reinraums statt. Diese Aussenwandung ist dabei vorteilhaft stationär angeordnet.

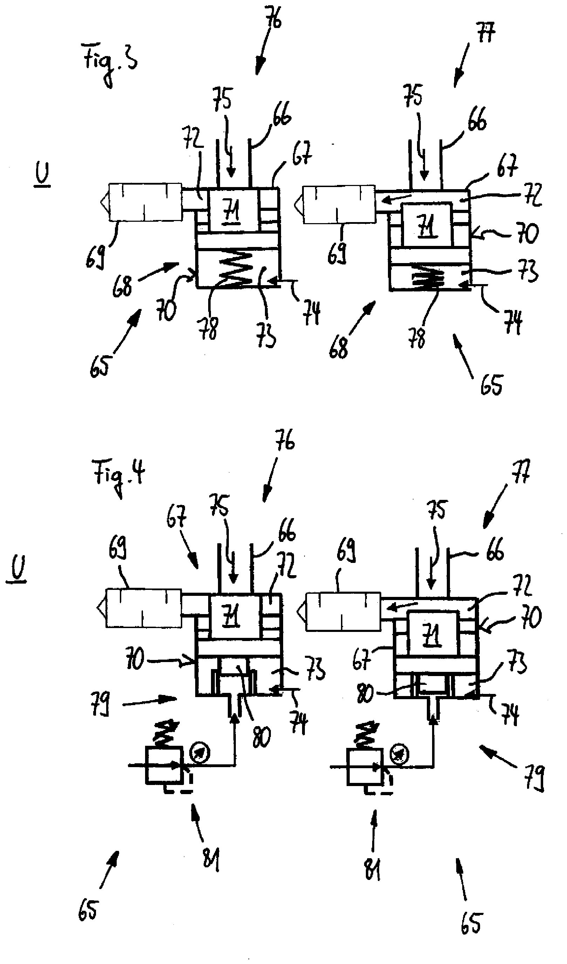

Die in der Figur 3 gezeigte Entlastungseinrichtung 65 umfasst einen Druckleitungsteil 66 einer Blasstation 8 der Umformvorrichtung 1 aus den Figuren 1 und 2, ein Entlastungsventil 67 mit einer Druckabfallsicherung 68 und einen Schalldämpfer 69 zum Reduzieren eines Schallpegels beim Entlasten des Prozessdrucks oder eines Rückgewinnungsdrucks.

Das Entlastungsventil 67 weist einen Ventilzylinder 70, einen Ventilkolben 71, eine Anschlusskammer 72 und eine Steuerdruckkammer 73 auf.

Die Steuerdruckkammer 73 kann mit einem Steuerdruck 74 beaufschlagt werden, mittels welchem der Ventilkolben 71 gegen einen Prozessdruck 75 in einer Schließposition 76 gehalten werden kann.

Entfällt der Steuerdruck 74 wird der Ventilkolben 71 von dem Prozessdruck 75 in eine Öffenposition 77 überführt und es kann eine Entlastung des Prozessdrucks 75 über den Schalldämpfer 69 in die Umgebung U erfolgen.

Die Druckabfallsicherung 68 umfasst eine mechanische Vorspannungsfeder 78, mittels welcher der Ventilkolben 71 ohne Unterstützung des Steuerdrucks 74 automatisch in die Schließposition 76 überführt werden kann, wenn der Prozessdruck 75 auf einen gewünschten Antikontaminationsdruck absinkt.

Somit ist gewährleistet, dass das Entlastungsventil 67 stets geschlossen wird, bevor der Prozessdruck 75 bis auf Atmosphärendruckniveau der Umgebung U absinken kann.

Hierdurch kann eine Keimausbreitung insbesondere ausgehend vom Schalldämpfer 69 hin zu dem Druckleitungsteil 66 verhindert werden.

Die in der Figur 4 gezeigte weitere Entlastungseinrichtung 65 entspricht in etwa der Entlastungseinrichtung 65 aus der Figur 3, insofern sind gleiche oder gleichwirkende Komponenten mit identischen Bezugszeichen versehen.

Der Unterschied ist in der Art der Vorspannungsfeder der Druckabfallsicherung 68 begründet, welche in diesem Ausführungsbeispiel als eine pneumatische Vorspannungsfeder 79 ausgestaltet ist, wodurch der Ventilkolben 71 berührungsfrei bewegt werden kann. Die pneumatische Vorspannungsfeder 79 verfügt über einen zusätzlichen Steuerkolben 80, wobei ein Federdruck mittels eines Druckreglers 81 so eingestellt ist, dass bei einem Erreichen eines Antikontaminierungsdrucks das Entlastungsventil 67 schließt.

Anstelle des Druckreglers 81 könnte auch ein vorhandener Steuerdruck 74 verwendet werden. In diesem Fall muss ein Kolbendurchmesser des Ventilkolbens 71 so gewählt werden, dass das Entlastungsventil 67 beim Erreichen des Antikontaminationsdrucks betriebssicher schließen kann.

Ansonsten umfasst die Entlastungseinrichtung 65 einen Druckleitungsteil 66 einer Blasstation 8 der Umformvorrichtung 1 aus den Figuren 1 und 2, das Entlastungsventil 67 mit einer Druckabfallsicherung 68 und einen Schalldämpfer 69 zum Reduzieren eines Schallpegels beim Entlasten des Prozessdrucks oder eines Rückgewinnungsdrucks. Das Entlastungsventil 67 weist einen Ventilzylinder 70, einen Ventilkolben 71, eine Anschlusskammer 72 und eine Steuerdruckkammer 73 auf. Die Steuerdruckkammer 73 kann auch hier mit dem Steuerdruck 74 beaufschlagt werden, mittels welchem der Ventilkolben 71 gegen einen Prozessdruck 75 in einer Schließposition 76 gehalten werden kann. Entfällt der Steuerdruck 74 wird der Ventilkolben 71 von dem Prozessdruck 75 in eine Öffenposition 77 überführt und es kann eine Entlastung des Prozessdrucks 75 über den Schalldämpfer 69 in die Umgebung U erfolgen. Mittels der pneumatischen Vorspannungsfeder 79 kann der Ventilkolben 71 ohne Unterstützung des Steuerdrucks 74 automatisch in die Schließposition 76 überführt werden, wenn der Prozessdruck 75 auf einen gewünschten Antikontaminationsdruck absinkt.

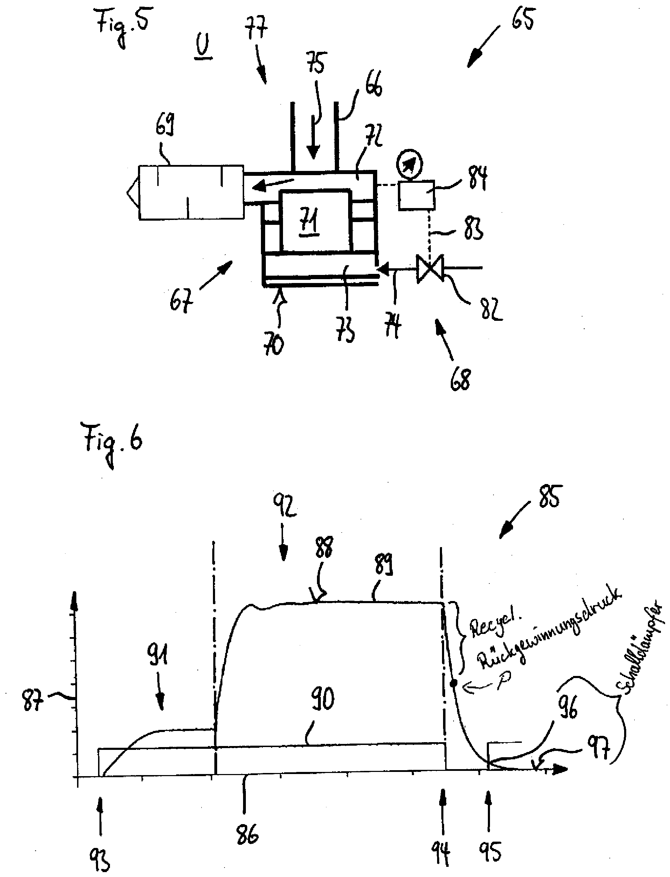

Die in der Figur 5 gezeigten Entlastungseinrichtung 65 entspricht in etwa den Entlastungseinrichtungen aus den Figuren 3 und 4, insofern sind gleiche oder gleichwirkende Komponenten wieder mit identischen Bezugszeichen versehen.

Insofern umfasst die in der Figur 5 gezeigte Entlastungseinrichtung 65 einen Druckleitungsteil 66, ein Entlastungsventil 67 mit einer Druckabfallsicherung 68 und einen Schalldämpfer 69. Das Entlastungsventil 67 weist einen Ventilzylinder 70, einen Ventilkolben 71, eine Anschlusskammer 72 und eine Steuerdruckkammer 73 auf. Die Steuerdruckkammer 73 kann mit einem Steuerdruck 74 beaufschlagt werden, mittels welchem der Ventilkolben 71 gegen einen Prozessdruck 75 in einer Schließposition (hier nicht dargestellt) gehalten werden kann.

Die Zuführung des Steuerdrucks 74 erfolgt hierbei mittels eines Steuerventils 82, welches der Steuerdruckkammer 73 vorgeschaltet ist. Das Steuerventil 82 wird über ein Steuersignal 83 betätigt, welches von einem Druckaufnehmer 84 bereitgestellt wird. Der Druckaufnehmer 84 detektiert hierbei die Druckverhältnisse auf Seiten des Druckleitungsteils 66 bzw. der Anschlusskammer 72.

Entfällt der Steuerdruck 74 durch Schließen des Steuerventils 82 wird der Ventilkolben 71 von dem Prozessdruck 75 in eine Öffenposition 77 überführt und es kann eine Entlastung des Prozessdrucks 75 über den Schalldämpfer 69 in die Umgebung U erfolgen.

Insofern wird der Schließpunkt des Entlastungsventils 67 durch Steuerung geregelt.

Das in der Figur 6 gezeigte Diagramm 85 weist eine Zeit-Achse 86 und eine Druck-Achse 87 auf.

In dem Diagramm 85 ist eine Druckkurve 88 hinsichtlich eines Prozessdrucks 89 sowie ein Steuerventil-Signal 90 eingezeichnet.

Die Druckkurve 88 bildet einen Vorformdruck 91 und einen Endformdruck 92 ab.

Wird das Steuerventil-Signal 90 zu einem Zeitpunkt 93 eingeschaltet, wird die Steuerdrucckammer 73 mit dem Steuerdruck 74 beaufschlagt und das Entlastungsventil 67 schließt sich. Demzufolge kann der Prozessdruck 89 ansteigen und ein Kunststoffvorformling 10 entsprechend expandiert werden.

Wird das Steuerventil-Signal 90 zu einem späteren Zeitpunkt 94 abgeschaltet, öffnet sich das Entlastungsventil 67 und der Prozessdruck 89 wird entlastet.

Erreicht der Prozessdruck 89 zu einem Entlastungszeitpunkt 95 einen vorbestimmten Antikontaminationsdruck 96, wird wieder das Steuerventil-Signal 90 initiiert und das Entlastungsventil 67 schließt erfindungsgemäß bevor das Atmosphärendruckniveau 97 insbesondere in der Anschlusskammer 72 des Entlastungsventils 67 erreicht wird.

Eine Zwangsentlastung des niedrigen Antikontaminationsdrucks 96 insbesondere aus dem Behältnis 10a kann dann beispielsweise beim Abheben einer Blasdüse an der Blasstation 8 erfolgen.

In Figur 6 sind auch die Drücke für das Recyceln und diejenigen, welche über den Schalldämpfen abgeleitet werden, dargestellt. Der Punkt P in der Druckkurve bezeichnet den Rückgewinnungsdruck.

### Bezugszeichenliste

- 1: Umformungsvorrichtung
- 2: Transportrad, Transporteinrichtung
- 4: Blasform
- 5: Reckstange
- 6: Blasformträger
- 8: Blasstation
- 9: Führungskurve
- 10: Kunststoffvorformlinge
- 10a: Behältnis
- 11: Folgeeinrichtung
- 12: Schlitten
- 13: Boden
- 15: Dichtungseinrichtung, Dichtlippe
- 17: Deckel
- 18: Wandung
- 19: Seitenwand, Abschnitt
- 20: Reinraum
- 21: Halterung
- 22: Zuführeinrichtung
- 23: Halteeinrichtung
- 24: Abführeinrichtung
- 25: Dichtungseinrichtung
- 26: Träger
- 27: Dichtungseinrichtung
- 28: Abschnitt
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage
- 60: Beaufschlagungseinrichtung
- 65: Entlastungseinrichtung
- 66: Druckleitungsteil
- 67: Entlastungsventil
- 68: Druckabfallsicherung
- 69: Schalldämpfer
- 70: Ventilzylinder
- 71: Ventilkolben
- 72: Anschlusskammer
- 73: Steuerdruckkammer
- 74: Steuerdruck
- 75: Prozessdruck
- 76: Schließposition
- 77: Öffenposition
- 78: mechanische Vorspannungsfeder
- 79: pneumatische Vorspannungsfeder
- 80: Steuerkolben
- 81: Druckregler
- 82: Steuerventil
- 83: Steuersignal
- 84: Druckaufnehmer
- 85: Diagramm
- 86: Zeit-Achse
- 87: Druck-Achse
- 88: Druckkurve
- 89: Prozessdruck
- 90: Steuerventil-Signal
- 91: Vorformdruck
- 92: Endformdruck
- 93: Zeitpunkt
- 94: späterer Zeitpunkt
- 95: Entlastungszeitpunkt
- 96: Antikontaminationsdruck
- 97: Atmosphärendruckniveau
- X: Achse
- U: Umgebung
- L: Linie
- Y: Richtung
- P: Rückgewinnungsdruck

## Patentansprüche

1. Vorrichtung (1) zum Umformen von Kunststoffvorformlingen (10) zu Kunststoffbehältnissen (10a) mit einem Reinraum (20), mit wenigstens einer Blasstation (8) umfassend eine Blasform (4) zur Formgebung der Kunststoffvorformlinge (10) mittels wenigstens eines Prozessdrucks (89, 91, 92) und mit einer Entlastungseinrichtung (65) zum Entlasten des Prozessdrucks (89, 91, 92) oder eines zu einem Rückgewinnungsdruck reduzierten Prozessdrucks in die Atmosphäre, bei welcher die Entlastungseinrichtung (65) wenigstens ein Entlastungsventil (67) umfasst, mittels welchem der Prozessdruck (89, 91, 92) oder der Rückgewinnungsdruck über einen Schalldämpfer (69) in die Atmosphäre entlastet werden kann und mit einer Druckabfallsicherung (68) zum Schließen des Entlastungsventils (67) vor einem Erreichen des Atmosphärendruckniveaus (97) an der Entlastungseinrichtung (65), wobei das Entlastungsventil bei einem Entlastungsvorgang bereits geschlossen ist, bevor das Atmosphärendruckniveau erreicht ist, wodurch eine Kontaminierung ausgeschlossen werden kann.

2. Vorrichtung (1) nach Anspruch 1, **dadurch gekennzeichnet , dass** die Druckabfallsicherung (68) Mittel zum Halten eines Antikontaminierungsdrucks (96) an dem Entlastungsventil (67) aufweist, wobei der Antikontaminierungsdruck (96) zwischen dem Prozess- bzw. Rückgewinnungsdruck (89, 91, 92) und dem Atmosphärendruck (97) liegt.

3. Umformvorrichtung (1) nach Anspruch 1 oder 2, **dadurch gekennzeichnet, dass** die Druckabfallsicherung (68) zum Schließen des Entlastungsventils (67) eine mechanische Vorspannungsfeder (78) für einen mechanisch betätigbaren Ventilkolben (71), insbesondere für einen mechanisch federvorgespannten Ventilkolben (71), umfasst.

4. Umformvorrichtung (1) nach Anspruch 1 oder 2, **dadurch gekennzeichnet, dass** die Druckabfallsicherung (68) zum Schließen des Entlastungsventils (67) eine pneumatische Vorspannungsfeder (79) für einen berührungslos betätigbaren Ventilkolben (71), insbesondere einen pneumatisch federvorgespannten Ventilkolben (71), umfasst.

5. Umformvorrichtung (1) nach Anspruch 1 oder 2, **dadurch gekennzeichnet, dass** die Druckabfallsicherung (68) zum Schließen des Entlastungsventils (67) einen mittels eines pneumatischen Steuerventils (82) betätigbaren Ventilkolben (71) umfasst, wobei das pneumatische Steuerventil (82) in Abhängigkeit eines Antikontaminierungsdrucks (96) steuerbar ist.

6. Umformvorrichtung (1) nach einem der Ansprüche 1 bis 5, **dadurch gekennzeichnet, dass** die Druckabfallsicherung (68) Mittel zum Detektieren eines reinraumseitigen und/oder blasformseitigen Prozessdrucks (89, 91, 92) oder Rückgewinnungsdrucks umfasst.

7. Umformvorrichtung (1) nach einem der Ansprüche 1 bis 6, **dadurch gekennzeichnet, dass** die Druckabfallsicherung (68) das Entlastungsventil (67) umfasst.

8. Verfahren zum Umformen von Kunststoffvorformlingen (10) zu Kunststoffbehältnissen (10a) mit einer Blasform (4) in einem Reinraum (20), bei welchem die Kunststoffvorformlinge (10) mit einem ersten Prozessdruck (91) in der Blasform (4) vorgeformt werden, bei welchem die vorgeformten Kunststoffvorformlinge (10) anschließend mit einem zweiten Prozessdruck (92) in der Blasform (4) endgeformt werden und bei welchem der zweite Prozessdruck (92) nach dem Endformen über ein Entlastungsventil (67) sogleich in die Atmosphäre entlastet oder auf einen Rückgewinnungsdruck reduziert wird und der Rückgewinnungsdruck über das Entlastungsventil (67) in die Atmosphäre entlastet wird, wobei das Entlastungsventil (67) während des Entlastens des Prozessdrucks (92) oder des Rückgewinnungsdrucks vor einem Erreichen des Atmosphärendruckniveaus (97) bereits geschlossen wird, wodurch eine Kontaminierung ausgeschlossen werden kann.

9. Verfahren nach Anspruch 8, **dadurch gekennzeichnet, dass** an einer der Blasform (4) zugewandten Anschlussseite des Entlastungsventils (67) zumindest temporär ein Antikontaminierungsdruck (96) einstellt wird, der immer oberhalb des Atmosphärendrucks (97) liegt.

10. Verfahren nach Anspruch 8 oder 9, **dadurch gekennzeichnet, dass** der Antikontaminierungsdruck (96) in den Reinraum (20) hinein und insbesondere an dem Kunststoffbehältnis (10a) entlastet wird.

## Claims

1. An apparatus (1) for moulding plastic preforms (10) into plastic containers (10a), comprising a clean room (20) having at least one blow station (8) comprising a blow mould (4) for shaping the plastic preforms (10) by means of at least one process pressure (89, 91, 92), and comprising a venting device (65) for venting the process pressure (89, 91, 92) or a process pressure reduced to a recovery pressure into the atmosphere, wherein the venting device (65) comprises at least one venting valve (67), by means of which the process pressure (89, 91, 92) or the recovery pressure can be vented into the atmosphere via a sound absorber (69), and comprising a pressure drop safety device (68) for closing the venting valve (67) before the atmospheric pressure level (97) is reached provided on the venting device (65), wherein the venting valve is already closed during a venting operation before the atmospheric pressure level is reached, whereby contamination can be excluded.

2. The apparatus (1) as claimed in claim 1, **characterized in that** the pressure drop safety device (68) includes means for maintaining an anti-contamination pressure (96) on the venting valve (67), said anti-contamination pressure (96) being between the process or recovery pressure (89, 91, 92) and atmospheric pressure (97).

3. The moulding apparatus (1) as claimed in claim 1 or 2, **characterized in that** the pressure drop safety device (68) for closing the venting valve (67) comprises a mechanical pre-tension spring (78) for a mechanically actuatable valve piston (71), in particular for a mechanically spring-loaded valve piston (71).

4. The moulding apparatus (1) as claimed in claim 1 or 2, **characterized in that** the pressure drop safety device (68) for closing the venting valve (67) comprises a pneumatic pre-tension spring (79) for a valve piston (71) that can be actuated in a contactless manner, in particular a pneumatically spring-loaded valve piston (71).

5. The moulding apparatus (1) as claimed in claim 1 or 2, **characterized in that** the pressure drop safety device (68) for closing the venting valve (67) comprises a valve piston (71) that can be actuated by means of a pneumatic control valve (82), said pneumatic control valve (82) being controllable dependent on an anti-contamination pressure (96).

6. The moulding apparatus (1) as claimed in any one of claims 1 to 5, **characterized in that** the pressure drop safety device (68) comprises means for detecting a process pressure (89, 91, 92) or a recovery pressure on the clean room side and/or on the blow mould side.

7. The moulding apparatus (1) as claimed in any one of claims 1 to 6, **characterized in that** the pressure drop safety device (68) comprises the venting valve (67).

8. A method for moulding plastic preforms (10) into plastic containers (10a) comprising a blow mould (4) in a clean room (20), wherein the plastic preforms (10) are pre-moulded in the blow mould (4) by means of a first process pressure (91), wherein the pre-moulded plastic preforms (10) are subsequently finish-moulded in the blow mould (4) by means of a second process pressure (92), and wherein the second process pressure (92) is vented into the atmosphere or is reduced to a recovery pressure via a venting valve (67) immediately after finish-moulding, wherein the recovery pressure is vented into the atmosphere via the venting valve (67), wherein the venting valve (67) is closed whilst the process pressure (92) or the recovery pressure is being vented, before or as the atmospheric pressure level (97) is reached, whereby contamination can be excluded.

9. The method as claimed in claim 8, **characterized in that** an anti-contamination pressure (96) is at least temporarily adjusted on the connection side of the venting valve (67), which faces the blow mould (4), which anti-contamination pressure is always above atmospheric pressure (97).

10. The method as claimed in claim 8 or 9, **characterized in that** the anti-contamination pressure (96) is vented into the clean room (20) and in particular on the plastic container (10a).

## Revendications

1. Dispositif (1) destiné à transformer des préformes en matière plastique (10) en contenants en matière plastique (10a), pourvu d'une salle blanche (20), d'au moins un poste de soufflage (8) comportant un moule de soufflage (4) pour le façonnage des préformes en matière plastique (10) au moyen d'au moins une pression de traitement (89, 91, 92), et d'un moyen de décharge (65) destiné à décharger dans l'atmosphère la pression de traitement (89, 91, 92) ou une pression de traitement réduite par rapport à une pression de récupération, pour lequel le moyen de décharge (65) comporte au moins une soupape de décharge (67), au moyen de laquelle la pression de traitement (89, 91, 92) ou la pression de récupération étant déchargeable dans l'atmosphère par l'intermédiaire d'un silencieux (69), et d'un moyen de sécurité en cas de chute de pression (68) destiné à fermer la soupape de décharge (67) avant que le niveau de pression atmosphérique (97) ne soit atteint sur le moyen de décharge (65), dans lequel la soupape de décharge (67), lors d'un processus de décharge, est déjà fermée avant que le niveau de pression atmosphérique ne soit atteint, permettant d'exclure une contamination.

2. Dispositif (1) selon la revendication 1, **caractérisé en ce que** le moyen de sécurité en cas de chute de pression (68) présente des moyens destinés à maintenir une pression d'anticontamination (96) sur la soupape de décharge (67), dans lequel la pression d'anticontamination (96) se situe entre la pression de traitement ou de récupération (89, 91, 92) et la pression atmosphérique (97).

3. Dispositif (1) de façonnage selon la revendication 1 ou 2, **caractérisé en ce que** le moyen de sécurité en cas de chute de pression (68) destiné à fermer la soupape de décharge (67) comporte un ressort de précontrainte mécanique (78) pour un piston de soupape (71) actionnable mécaniquement, en particulier pour un piston de soupape (71) précontraint mécaniquement par un ressort.

4. Dispositif (1) de façonnage selon la revendication 1 ou 2, **caractérisé en ce que** le moyen de sécurité en cas de chute de pression (68) destiné à fermer la soupape de décharge (67) comporte un ressort de précontrainte pneumatique (79) pour un piston de soupape (71) actionnable sans contact, en particulier un piston de soupape (71) précontraint pneumatiquement par un ressort.

5. Dispositif (1) de façonnage selon la revendication 1 ou 2, **caractérisé en ce que** le moyen de sécurité en cas de chute de pression (68) destiné à fermer la soupape de décharge (67) comporte un piston de soupape (71) actionnable au moyen d'une soupape de commande pneumatique (82), la soupape de commande pneumatique (82) étant commandée en fonction d'une pression d'anticontamination (96).

6. Dispositif (1) de façonnage selon l'une quelconque des revendications 1 à 5, **caractérisé en ce que** le moyen de sécurité en cas de chute de pression (68) comporte des moyens destinés à détecter une pression de traitement (89, 91, 92) ou une pression de récupération côté salle blanche et/ou côté moule de soufflage.

7. Dispositif (1) de façonnage selon l'une quelconque des revendications 1 à 6, **caractérisé en ce que** le moyen de sécurité en cas de chute de pression (68) comporte la soupape de décharge (67).

8. Procédé de transformation de préformes en matière plastique (10) en contenants en matière plastique (10a) au moyen d'un moule de soufflage (4) dans une salle blanche (20), les préformes en matière plastique (10) étant préformées dans le moule de soufflage (4) à une première pression de traitement (91), les préformes en matière plastique (10) préformées étant ensuite soumises à un formage final dans le moule de soufflage (4) à une deuxième pression de traitement (92) et la deuxième pression de traitement (92) se déchargeant immédiatement dans l'atmosphère après le formage final par l'intermédiaire d'une soupape de décharge (67) ou se réduisant à une pression de récupération et la pression de récupération étant déchargée dans l'atmosphère par l'intermédiaire de la soupape de décharge (67), dans lequel la soupape de décharge (67), pendant la décharge de la pression de traitement (92) ou de la pression de récupération, est déjà fermée avant que le niveau de pression atmosphérique (97) ne soit atteint, permettant d'exclure une contamination.

9. Procédé selon la revendication 8, **caractérisé en ce qu'**une pression d'anticontamination (96) toujours supérieure à la pression atmosphérique (97) est réglée au moins temporairement sur un côté de raccordement tourné vers le moule de soufflage (4) de la soupape de décharge (67).

10. Procédé selon la revendication 8 ou 9, **caractérisé en ce que** la pression d'anticontamination (96) est déchargée à l'intérieur de la salle blanche (20) et en particulier sur le contenant en matière plastique (10a).
